# EUROPEAN PATENT SPECIFICATION

(11) **EP 4 216 304 B1**
(45) Date of publication and mention of the grant of the patent: **18.11.2026**
(21) Application number: 21911628.2
(22) Date of filing: 24.12.2021
(51) Int. Cl.: H01M 4/134, H01M 4/62, H01M 4/133, H01M 10/052, H01M 4/64, H01M 4/66, H01M 10/14, H01M 4/13, H01M 4/04, H01M 4/1393, H01M 4/1395, H01M 4/36, H01M 4/38, H01M 4/48, H01M 4/587, H01M 4/02

(54) **NEGATIVE ELECTRODE FOR SECONDARY BATTERY, NEGATIVE ELECTRODE SLURRY AND METHOD FOR MANUFACTURING NEGATIVE ELECTRODE**
NEGATIVELEKTRODE FÜR SEKUNDÄRBATTERIE, NEGATIVELEKTRODENAUFSCHLÄMMUNG UND VERFAHREN ZUR HERSTELLUNG DER NEGATIVELEKTRODE
ÉLECTRODE NÉGATIVE POUR BATTERIE SECONDAIRE, SUSPENSION ÉPAISSE D'ÉLECTRODE NÉGATIVE ET PROCÉDÉ DE FABRICATION D'ÉLECTRODE NÉGATIVE

(30) Priority: 25.12.2020 JP 2020216840
(43) Date of publication of application: 26.07.2023
(73) Proprietor: LG Energy Solution, Ltd., Seoul 07335 (KR)
(72) Inventor: MATSUBARA, Keiko, Tokyo 140--0002 (JP); TAKAMUKU, Akira, Tokyo 140--0002 (JP)
(74) Representative: Hoffmann Eitle
(86) International application number: PCT/KR2021/019896
(87) International publication number: WO 2022/139563

(56) References cited:
- WO-A1-2010/089326
- CA-A1- 3 041 000
- CN-A- 109 690 837
- JP-A- 2019 535 096
- KR-A- 20150 060 513
- KR-A- 20160 128 912
- KR-A- 20170 025 136
- KR-A- 20190 047 719
- KR-A- 20190 077 399
- KR-A- 20190 101 651

## Description

### TECHNICAL FIELD

The present disclosure relates to a negative electrode for a secondary battery, a negative electrode slurry and a method for manufacturing a negative electrode.

The present application claims priority to Japanese Patent Application No. 10-2020-216840 filed on December 25, 2020.

### BACKGROUND ART

As technical development and needs for mobile instruments and electric vehicles have been increased, secondary batteries as energy sources have been increasingly in demand. Among such secondary batteries, lithium-ion secondary batteries having high energy density and voltage, long cycle life and a low self-discharge rate have been commercialized and used widely. Recently, active studies have been conducted to provide such lithium-ion secondary batteries with high capacity.

Silicon-based materials, such as silicon oxide or silicon-based alloy, have a higher theoretical capacity density as compared to carbonaceous materials, such as graphite, mainly used currently, and thus have been studied to date as negative electrode materials for improving the energy density of lithium-ion secondary batteries. Particularly, silicon oxide (SiOₓ (0 < x < 2), such as SiO) of the silicon-based materials have been commercialized partially by virtue of a relatively low swelling ratio. However, such silicon oxide shows an initial efficiency at least 20% lower than the initial efficiency of graphite, and provides an increased difference in irreversible capacity as compared to a positive electrode, when being used alone. Therefore, such silicon oxide has been used actually by being mixed with carbonaceous materials at a content of several %. In addition, silicon-based alloy having a lower irreversible capacity as compared to silicon oxide shows a problem in terms of swelling ratio, and thus has been examined to be used in combination with graphite so that the swelling ratio of the whole electrode may be reduced.

However, carbonaceous materials and silicon-based materials show different powder properties, conductivity, swelling ratio, or the like. Thus, when using carbonaceous materials in combination with silicon-based materials, it is difficult to form a structure configured to use the whole active materials, while maintaining the conductive path between the carbonaceous materials and the silicon-based materials under the condition of swelling and shrinking caused by repeated charge/discharge. In addition, in this case, the capacity of the carbonaceous materials as well as the capacity of the silicon-based materials having a higher swelling ratio becomes increasingly unused.

Further, when using artificial graphite as a carbonaceous material, it shows an advantage of a lower swelling ratio as compared to natural graphite, but it is hard and has a difficulty in deformation even under pressing, and it allows easy formation of voids in the gaps with the silicon-based material from the start of the manufacture of an electrode, and thus the silicon-based material particles having a smaller particle diameter are isolated to cause degradation of initial capacity or degradation of capacity after repeating charge/di scharge.

Therefore, in order to ensure the conductive path in a negative electrode including both a carbonaceous material and a silicon-based material, there have been suggested a method for forming a composite of a non-conductive silicon-based material with a conductive carbonaceous material (e.g. Patent Document 1 or Patent Document 2), or a method for adding a nanocarbon material, such as graphene or carbon nanotubes, as a conductive material (e.g. Patent Document 3). However, in the case of the former, there is a problem in that it is difficult to ensure the conductive path among the particles. In addition, in the case of the latter, there are problems in that it is difficult to disperse the nanocarbon material homogeneously throughout the whole negative electrode, and the nanocarbon material is very expensive.

Patent Document 4 relates to a method of preparing anode slurries of lithium-ion batteries. Patent Document 5 relates to a precursor composition of a negative electrode of a Li-ion battery and uses thereof. Patent Document 6 relates to a silicon-carbon particle composite material suitable for use as an active material in a negative electrode of a Li-ion battery.

### [References]

### [Patent Documents]

Patent Document 1: Japanese Laid-Open Patent No. 2019-067579
Patent Document 2: International Patent Publication No. 2012/140790
Patent Document 3: Japanese Laid-Open Patent No. 2020-013718
Patent Document 4: Canadian Patent Application No. 3 041 000
Patent Document 5: Chinese Patent Application No. 109690837
Patent Document 6: Japanese Patent Application No. 2019535096

### DISCLOSURE

### Technical Problem

The present disclosure is designed to solve the problems of the related art, and therefore the present disclosure is directed to providing a negative electrode for a secondary battery, which enables stable repetition of charge/discharge by forming a high-level and firm conductive path in the negative electrode to provide improved life characteristics, a negative electrode slurry and a method for manufacturing a negative electrode.

### Technical Solution

According to the first embodiment of the present disclosure, there is provided a negative electrode for a secondary battery, including at least a graphite-based material and a silicon-based material, as a negative electrode active material, and a conductive material, wherein the graphite-based material includes a granulated product of artificial graphite with natural graphite, at least a part of natural graphite in the granulated product is exfoliated partially to form an exfoliated portion, and the exfoliated portion is in contact with the silicon-based material or another granulated product of artificial graphite with natural graphite, or forms a composite with the silicon-based material.

According to the second embodiment of the present disclosure, there is provided the negative electrode for a secondary battery as defined in the first embodiment, wherein the silicon-based material includes either or both of silicon oxide and silicon-based alloy.

According to the third embodiment of the present disclosure, there is provided the negative electrode for a secondary battery as defined in the second embodiment, wherein the silicon-based alloy includes at least one selected from titanium (Ti), vanadium (V), chrome (Cr), manganese (Mn), iron (Fe), cobalt (Co), nickel (Ni) and copper (Cu).

According to the fourth embodiment of the present disclosure, there is provided the negative electrode for a secondary battery as defined in any one of the first to the third embodiments, wherein the conductive material is carbon black.

According to the fifth embodiment of the present disclosure, there is provided the negative electrode for a secondary battery as defined in any one of the first to the fourth embodiments, wherein the weight ratio of the graphite-based material to the silicon-based material is 98:2-50:50.

According to the sixth embodiment of the present disclosure, there is provided the negative electrode for a secondary battery as defined in any one of the first to the fifth embodiments, wherein the granulated product includes artificial graphite and natural graphite at a weight ratio of 60:40-90: 10.

According to the seventh embodiment of the present disclosure, there is provided a secondary battery including the negative electrode as defined in any one of the first to the sixth embodiments, and further including a positive electrode, a separator interposed between the negative electrode and the positive electrode, and an electrolyte.

According to the eighth embodiment of the present disclosure, there is provided a negative electrode slurry for a secondary battery, including: a graphite-based material and a silicon-based material, as a negative electrode active material; a conductive material; a solvent; and at least one of a thickener and a binder, at a solid content of 60 wt% or more based on the weight of the slurry, wherein the graphite-based material includes a granulated product of artificial graphite with natural graphite.

According to the ninth embodiment of the present disclosure, there is provided the negative electrode slurry as defined in the eighth embodiment, wherein at least a part of natural graphite in the granulated product is exfoliated partially to form an exfoliated portion.

According to the tenth embodiment of the present disclosure, there is provided the negative electrode slurry as defined in the eighth or the ninth embodiment, wherein the solid content is 65-75 wt% based on the weight of the slurry.

According to the eleventh embodiment of the present disclosure, there is provided a method for manufacturing a negative electrode for a secondary battery, including the steps of: mixing a graphite-based material and a silicon-based material, as a negative electrode active material, a conductive material, a solvent, and at least one of a thickener and a binder to prepare a slurry having a solid content of 60 wt% or more based on the weight of the slurry; carrying out hard mixing of the slurry; and applying the slurry to a current collector to obtain a negative electrode, wherein the graphite-based material is a granulated product of artificial graphite with natural graphite.

According to the twelfth embodiment of the present disclosure, there is provide the method as defined in the eleventh embodiment, wherein at least a part of natural graphite in the granulated product is exfoliated partially to form an exfoliated portion, in the step of carrying out hard mixing of the slurry.

According to the thirteenth embodiment of the present disclosure, there is provide the method as defined in the eleventh or the twelfth embodiment, which further includes a step of adding a binder and a solvent to the slurry, after the step of carrying out hard mixing of the slurry.

### Advantageous Effects

According to the present disclosure, since a granulated product of artificial graphite with natural graphite is used for the graphite-based material as a negative electrode active material, and at least a part of natural graphite in the granulated product is exfoliated partially to form an exfoliated portion, the silicon-based material and the graphite-based material are in contact with each other over a larger area through the exfoliated portion, or the silicon-based material forms a composite with the partially exfoliated portion. In this manner, it is possible to form a high-level and firm conductive path with graphite to repeat charge/discharge stably, thereby providing improved life characteristics.

### DESCRIPTION OF DRAWINGS

FIG. 1 is a scanning electron microscopic (SEM) image illustrating the surface of the negative electrode according to Example 3.
FIG. 2 is another SEM image illustrating the surface of the negative electrode according to Example 3.

### BEST MODE

Hereinafter, preferred embodiments of the present disclosure will be described in detail. However, the scope of the present invention is not limited thereto but is defined by the appended claims.

Throughout the specification, unless otherwise stated, the term 'average particle diameter' refers to the particle diameter at an accumulation value of 50% in the particle size distribution determined by the laser diffraction scattering method, i.e. median diameter (D₅₀). In addition, the sign '-' is used as a meaning including numbers at both ends of the range it refers to. For example, the expression '1-2' means 'equal to or more than 1 and equal to or less than 2'.

### [Non-Aqueous Electrolyte Secondary Battery]

In one aspect, the present disclosure relates to a non-aqueous electrolyte secondary battery. The non-aqueous electrolyte secondary battery according to an embodiment of the present disclosure includes a negative electrode, a positive electrode, a separator interposed between the negative electrode and the positive electrode, and a non-aqueous electrolyte. Particular examples of the secondary battery include a lithium-ion secondary battery having several advantages, such as high energy density, discharge voltage and output stability.

Hereinafter, the present disclosure will be explained by taking such a lithium-ion secondary battery as an example. However, the scope of the present disclosure is not limited to the lithium-ion secondary battery, but the present disclosure may be applied to various types of non-aqueous electrolyte secondary batteries within the scope of the appended claims.

The lithium-ion secondary battery according to an embodiment of the present disclosure includes a negative electrode, a positive electrode, a separator interposed between the negative electrode and the positive electrode, and a non-aqueous electrolyte. In addition, the lithium-ion secondary battery may optionally include a battery casing configured to receive an electrode assembly including a negative electrode, a positive electrode and a separator, and a sealing member for sealing the battery casing.

### [Negative Electrode]

The negative electrode includes a negative electrode current collector, and a negative electrode active material layer formed on one surface or both surfaces of the negative electrode current collector. The negative electrode active material layer may be formed partially or totally on the surface of the negative electrode current collector.

### (Negative Electrode Current Collector)

The negative electrode current collector used for the negative electrode is not particularly limited, as long as it has conductivity, while not causing any chemical change in a battery. Particular examples of the negative electrode current collector include: copper; stainless steel; aluminum; nickel; titanium; baked carbon; copper or stainless steel surface-treated with carbon, nickel, titanium, silver, etc.; aluminum-cadmium alloy, or the like.

The negative electrode current collector may have a thickness of 3-500 µm. Fine surface irregularities may be formed on the surface of the negative electrode current collector to enhance the adhesion with a negative electrode active material. For example, the negative electrode current collector may have various shapes, such as a film, a sheet, a foil, a net, a porous body, a foam, a nonwoven fabric body, or the like.

### (Negative Electrode Active Material Layer)

For example, the negative electrode active material layer may be formed by applying a negative electrode slurry including a mixture of a negative electrode active material, a binder and a conductive material, dissolved or dispersed in a solvent, onto a negative electrode current collector, followed by drying and pressing. In a variant, the negative electrode active material layer may be formed by casting a negative electrode slurry onto another support, peeling a film from the support and laminating the film on a negative electrode current collector. The mixture may further include a dispersing agent, a filler, or other optional additives, if necessary.

The negative electrode active material may be present in an amount of 70-99 wt% based on the total weight of the negative electrode active material layer.

### (Negative Electrode Active Material)

In the lithium-ion secondary battery according to an embodiment of the present disclosure, the negative electrode active material includes at least a graphite-based material and a silicon-based material.

The graphite-based material includes a granulated product of artificial graphite with natural graphite. For example, the granulated product is formed by attaching natural graphite particles to artificial graphite particles as a matrix (core). The granulation may be carried out through a known process, such as a dry process of mixing artificial graphite with natural graphite under ambient atmosphere, etc., and granulating the resultant mixture under the application of mechanical/physical force, or a wet process of dispersing and mixing artificial graphite and natural graphite in a solvent and removing the solvent.

Artificial graphite is graphite produced industrially by firing (i.e. graphitizing) a graphitizable carbonaceous material, such as cokes or coal tar pitch, at high temperature (e.g. about 2800°C). For example, known examples of artificial graphite include mesocarbon microbeads, mesocarbon fibers, massive artificial graphite, or the like. However, artificial graphite that may be used according to the present disclosure is not particularly limited. In general, artificial graphite is harder as compared to natural graphite, and is known to cause less swelling during charge/discharge as compared to natural graphite, when being used for the negative electrode of a lithium-ion secondary battery.

Natural graphite is graphite produced by mining graphite ore, followed by treatment, such as concentration of ore, purification, or the like. Known examples of natural graphite include flaky natural graphite, massive natural graphite, amorphous graphite, or the like. However, natural graphite that may be used according to the present disclosure is not particularly limited.

The size of artificial graphite and that of natural graphite are selected in such a manner that the granulated product formed by granulating them may have a desired size. In addition, the granulated body obtained by granulating artificial graphite and natural graphite may have an average particle diameter (D₅₀) of 3-30 µm, preferably 5-25 µm, more preferably 15-20 µm. For example, the granulated body may have an average particle diameter of 20 µm.

The weight ratio of artificial graphite to natural graphite in the granulated product is selected in such a manner that a sufficient amount of natural graphite may be present on the surface of the granulated body. For example, the weight ratio of artificial graphite:natural graphite may be 60:40-90: 10, e.g. 80:20.

The silicon-based material may include silicon oxide, silicon-based alloy, silicon (Si) powder, silicon nanoparticles, silicon nanowires, or the like. Such silicon-based materials may be used alone or in combination. Preferably, either or both of silicon oxide and silicon-based alloy may be used.

In general, silicon oxide is represented by the general formula of SiOₓ, wherein 0 < x < 2, and may be exemplified by SiO (x = 1). For example, silicon oxide may have a structure including Si microparticles dispersed in a matrix of amorphous silicon oxide in the form of microcrystals or in the amorphous form. Silicon oxide may include SiOₓ having a specific value of x alone, or may be a mixture of two or more SiOₓ species having a different value of x.

The silicon-based alloy may be a granulated product having a particle structure including transition metal silicide microparticles dispersed in a matrix of amorphous silicon in the form of microcrystals or in the amorphous form. For example, such a granulated product of silicon-based alloy is obtained by atomizing (preferably, gas atomizing) of silicon and a transition metal to obtain silicon alloy powder, and converting silicon into amorphous silicon by mechanical alloying treatment. For example, the content of amorphous silicon in the granulated product of silicon-based alloy may be 10-60 wt%, preferably 20-40 wt%. The transition metal of silicide may be at least one selected from titanium (Ti), vanadium (V), chrome (Cr), manganese (Mn), iron (Fe), cobalt (Co), nickel (Ni) and copper (Cu). Particular examples of a combination of two or more transition metals include Cr, Ti and Fe, preferably Cr and Ti. When using Cr and Ti, SiCrTi alloy powder is obtained, and particular examples of silicide formed theoretically in the powder include binary silicide, such as CrSi, CrSi₂, TiSi₂ or TiSi, and ternary silicide, such as CrₓSi_{y}Ti_{z}. In the case of SiCrTi alloy powder, Si is contained as a main ingredient at 70-90 atom%, and the balance includes the transition metal ingredients. For example, the atomic weight ratio of Si:Cr:Ti may be 84 atom%:8 atom%:8 atom%, or 82.4 atom%:8.8 atom%:8.8 atom%.

The silicon-based material may be in a particle state, and the average particle diameter (D₅₀) of the silicon-based material may be 0.1-10 µm, 1-5 µm (e.g. 5 µm), or 1-2 µm.

The average particle diameter of the silicon-based material may be selected in such a manner that it may be smaller than the average particle diameter of the graphite-based material. When the silicon-based material has such a smaller particle size, the silicon-based material showing a higher swelling ratio as compared to the carbonaceous material may be disposed in the voids (e.g. voids among the carbonaceous material particles), or on the surface or inside of the carbonaceous material.

The weight ratio of the graphite-based material to the silicon-based material in the negative electrode active material may be selected considering the swelling ratio and capacity of the silicon-based material. For example, the weight ratio of the graphite-based material to the silicon-based material may be 98:2-50:50, particularly 98:2-70:30 (e.g. 90: 10).

### (Binder)

The binder is an ingredient which accelerates binding between an active material and a conductive material and binding to a current collector. Particular examples of the binder include, but are not limited to: polyvinylidene fluoride (PVDF), polyvinyl alcohol (PVA), polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated EPDM, styrenebutadiene rubber (SBR), polyacrylic acid, acrylamide, fluoro-rubber, various copolymers thereof, or the like. Such binders may be used alone or in combination.

The content of the binder may be 0.1-30 wt% based on the total weight of the negative electrode active material. The content of the binder may be preferably 0.5-20 wt%, and more preferably 1-10 wt%. When the content of the binder polymer satisfies the above-defined range, it is possible to impart sufficient adhesion in the electrode, while preventing degradation of the capacity of a battery.

### (Conductive Material)

The conductive material is not particularly limited, as long as it is an electrically conductive material causing no chemical change. Particular examples of the conductive material include, but are not limited to: carbonaceous materials (carbonaceous materials added separately from the carbonaceous material as a negative electrode active material), such as artificial graphite, natural graphite, carbon nanotubes, graphene, carbon black, acetylene black, Ketjen black, denka black, thermal black, channel black, furnace black, lamp black, carbon fibers, etc.; metal powder or metal fibers, such as aluminum, tin, bismuth, silicon, antimony, nickel, copper, titanium, vanadium, chrome, manganese, iron, cobalt, zinc, molybdenum, tungsten, silver, gold, lanthanum, ruthenium, platinum, iridium, etc.; conductive whisker, such as zinc oxide or potassium titanate; conductive metal oxide, such as titanium oxide; conductive polymers, such as polyaniline, polythiophene, polyacetylene, polypyrrole, polyphenylene derivatives, etc., or the like. Such conductive materials may be used alone or in combination.

Advantageously, in terms of dispersibility or cost, a carbonaceous material, such as carbon black, acetylene black, ketjen black, denka black, thermal black, channel black, furnace black or lamp black, particularly carbon black, may be selected as a conductive material. However, this does not exclude the use of artificial graphite, natural graphite, carbon nanotubes or graphene as a conductive material.

The content of the conductive material may be 0.1-30 wt% based on the total weight of the negative electrode active material layer. The content of the conductive material may be preferably 0.5-15 wt%, more preferably 0.5-10 wt%, based on the total weight of the negative electrode active material layer. When the content of the conductive material satisfies the above-defined range, there are advantages in that sufficient conductivity can be provided, and the amount of the negative electrode active material is not decreased , thereby ensuring battery capacity.

### (Thickener)

The negative electrode slurry may further include a thickener. Particularly, the thickener may be a cellulose-based compound. Particular examples of the cellulose-based compound include carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or the like. Such cellulose-based compounds may be used alone or in combination. For example, the thickener may be used in an amount of 0.5-10 wt% based on the total weight of the negative electrode active material layer.

### (Solvent)

The solvent used for negative electrode slurry is not particularly limited, as long as it is used conventionally for manufacturing a negative electrode. Particular examples of the solvent include, but are not limited to: pure water, N-methyl-2-pyrrolidone (NMP), dimethyl sulfoxide (DMSO), isopropyl alcohol, acetone, or the like. Such solvents may be used alone or in combination.

### [Method for Manufacturing Negative Electrode]

The method for manufacturing a negative electrode for a lithium-ion secondary battery according to an embodiment of the present disclosure may include the steps of: (1) preparing a negative electrode slurry; (2) carrying out hard mixing of the slurry; and (3) manufacturing a negative electrode from the negative electrode slurry.

### (1) Step of Preparing Negative Electrode Slurry

A graphite-based material (granulated product of artificial graphite with natural graphite) and a silicon-based material, as a negative electrode active material, and a conductive material, a thickener, a binder and a solvent are prepared. If necessary, a dispersant or a filler, or other optional additives are prepared. When the thickener is dissolved in a solvent (water, NMP, etc.) in advance, it may be used with ease. In addition, the above-mentioned ingredients are mixed to prepare a negative electrode slurry. Particularly, the conductive material, the thickener and the dispersant are added to and mixed with the solvent first, and then the silicon-based material and the graphite-based material are introduced thereto. When using a binder not requiring the combined use of a thickener, a part of the binder is introduced instead of the thickener.

The solid content in the negative electrode slurry is controlled to be at least 60 wt% based on the total weight of the slurry. The solid content may be controlled by adjusting the amount of the solvent added to the slurry. Preferably, the negative electrode slurry is prepared in such a manner that it may have a solid content of 65 wt% or more. When the solid content is less than 60 wt%, it is not possible to obtain sufficient shear stress in the subsequent hard mixing step due to the low viscosity of the slurry. In addition, it is not possible to realize sufficient interaction (collision, impact, friction, etc.) between the graphite-based material and the silicon-based material. The upper limit of the solid content in the slurry is not particularly limited, as long as the subsequent hard mixing step can be carried out suitably. However, when the solid content is excessively high, each ingredient in the slurry shows low dispersibility, and thus the solid content may be set to 75 wt% or less, preferably 70 wt% or less.

### (2) Step of Carrying Out Hard Mixing of Negative Electrode Slurry

Continuously, the negative electrode slurry prepared from step (1) is subjected to hard mixing (also referred to as kneading). For example, the hard mixing may be carried out by using a known process, for example, by using a planetary centrifugal mixer.

During the hard mixing, the silicon-based material collides the graphite-based material vigorously due to the solid content in the slurry as high as 60 wt% or more. Herein, natural graphite is generally softer than artificial graphite or a silicon-based material. For this, in at least a part of natural graphite present in the granulated product of graphite-based material, the surface portion of natural graphite is partially exfoliated by the surface collision caused by the hard silicon-based material, thereby forming an exfoliated portion. Herein, 'partially exfoliated' means that the surface portion of natural graphite is not completely peeled and separated from natural graphite but the surface portion of natural graphite is partially peeled, curled and exfoliated, that is to say, cracked and roughened. The exfoliated portion may be a single layer of graphene. In this case, the exfoliation means graphenization. In a variant, the exfoliated portion may have a number of graphene layers of 2 or more, about several tens, about several hundreds, or about several thousands or less, and may show a thickness of several nanometers or less, or several tens of nanometers or less, or about a sub-micron scaled thickness (e.g. about 300 nm or less, or about 100 nm or less).

Meanwhile, artificial graphite in the granulated body is little broken during the hard mixing due to its rigidity. As a result, the whole granulated body of graphite-based material can inhibit an undesired degree of breakage or pulverization during the hard mixing by virtue of the presence of artificial graphite as a matrix. Similarly, the rigid silicon-based material is little broken during the hard mixing.

As the hard mixing proceeds, the silicon-based material is dispersed in the slurry, becomes in contact with the granulated body, particularly with the exfoliated portion formed in natural graphite, and thus may form a composite (for example, may be adhered/bound physically and/or chemically) with the exfoliated portion of natural graphite by the shear force or collision force applied during the hard mixing.

During the hard mixing, the temperature of the slurry is set to a certain level of high temperature (e.g. 60-80°C, preferably 65-75°C) in order to accelerate the hard mixing. As a result, partial exfoliation of a part of natural graphite in the granulated body may be accelerated.

### (3) Step of Manufacturing Negative Electrode from Negative Electrode Slurry

After completing the hard mixing, mixing is further carried out by introducing the binder totally and adding the solvent to control the solid content to about 50 wt%. Finally, the solvent is added to control the slurry to a solid content that allows easy application, followed by light mixing. The resultant negative electrode slurry is applied to the negative electrode current collector, followed by drying and pressing, to obtain a negative electrode including a negative electrode active material layer formed on the negative electrode current collector. Before applying the negative electrode slurry, the solvent is further added to the slurry after the hard mixing to facilitate application, and then the slurry may be applied.

In a variant, the negative electrode slurry may be cast onto another support, and the film obtained by peeling it from the support may be laminated on the negative electrode current collector to obtain a negative electrode. In addition, any optional method other than the above-mentioned methods may be used to form a negative electrode active material layer on the negative electrode current collector.

The resultant negative electrode includes at least the graphite-based material (granulated body of artificial graphite with natural graphite) and the silicon-based material, as a negative electrode active material, and the conductive material. In at least a part of natural graphite in the granulated product, particularly the surface portion of natural graphite is partially exfoliated to form an exfoliated portion. Since the exfoliated portion is not separated from natural graphite, it exists on the surface of the granulated product toward various directions, while being in contact with the adjacent silicon-based material or another granulated product, and a part of the exfoliated portion further forms a composite with the silicon-based material to ensure an isotropic conductive path in the negative electrode. The conductive path formed by the exfoliated portion does not cause any dispersion-related problem, since it is derived from the granulated body as a negative electrode active material. In addition, since the conductive material is further added, the conductive path may be further improved. Further, since the silicon-based material having a smaller particle diameter is in contact with the granulated body over a large area through the exfoliated portion or forms a composite with the exfoliated portion, a high-level and firm conductive path is formed throughout the whole negative electrode.

### [Positive Electrode]

In the lithium-ion secondary battery according to an embodiment of the present disclosure, the positive electrode includes a positive electrode current collector and a positive electrode active material layer formed on one surface or both surfaces of the positive electrode current collector. The positive electrode active material layer may be formed partially or totally on the surface of the positive electrode current collector.

### (Positive Electrode Current Collector)

The positive electrode current collector used for the positive electrode is not particularly limited, as long as it has conductivity, while not causing any chemical change in a battery. Particular examples of the positive electrode current collector include: stainless steel; aluminum; nickel; titanium; baked carbon; aluminum or stainless steel surface-treated with carbon, nickel, titanium, silver, etc.; aluminum-cadmium alloy, or the like.

The positive electrode current collector may have a thickness of 3-500 µm. Fine surface irregularities may be formed on the surface of the positive electrode current collector to enhance the adhesion with a positive electrode active material. For example, the positive electrode current collector may have various shapes, such as a film, a sheet, a foil, a net, a porous body, a foam, a nonwoven fabric body, or the like.

### (Positive Electrode Active Material Layer)

For example, the positive electrode active material layer may be formed by applying positive electrode slurry including a mixture of a positive electrode active material, a binder and a conductive material, dissolved or dispersed in a solvent, onto a positive electrode current collector, followed by drying and pressing. The mixture may further include a dispersing agent, a filler, or other optional additives, if necessary.

The positive electrode active material may be present in an amount of 80-99 wt% based on the total weight of the positive electrode active material layer.

### (Positive Electrode Active Material)

The positive electrode active material may include a compound capable of reversible lithium intercalation/deintercalation. Particular examples of the positive electrode active material include lithium metal composite oxides containing at least one metal, such as cobalt, manganese, nickel, copper, vanadium or aluminum, and lithium. More particularly, the lithium metal composite oxides may include: lithium-manganese oxides (e.g. LiMnO₂, LiMn₂O₄, etc.); lithium-cobalt oxides (e.g. LiCoO₂, etc.); lithium-nickel oxides (e.g., LiNiO₂, etc.); lithium-copper oxides (e.g. Li₂CuO₂, etc.); lithium-vanadium oxides (e.g. LiV₃O₈, etc.); lithium-nickel-manganese oxides (e.g., LiNi_{1-z}Mn_{z}O₂ (wherein 0 < z < 1), LiMn_{2-z}Ni_{z}O₄ (wherein 0 < z < 2)); lithium-nickel-cobalt oxides (e.g., LiNi_{1-y}Co_{y}O₂ (wherein 0 < y < 1)); lithium-manganese-cobalt oxides (e.g., LiCo_{1-z}Mn_{z}O₂ (wherein 0 < z < 1), LiMn_{2-y}Co_{y}O₄ (wherein 0 < y < 2)); lithium-nickel-manganese-cobalt oxides (e.g., Li(NiₓCo_{y}Mn_{z})O₂ (0 < x < 1, 0 < y < 1, 0 < z < 1, x + y + z = 1) or Li(NiₓCo_{y}Mn_{z})O₄ (0 < x < 2, 0 < y < 2, 0 < z < 2, x + y + z = 2)); lithium-nickel-cobalt-metal (M) oxides (e.g., Li(NiₓCo_{y}Mn_{z}M_{w})O₂ (wherein M is selected from the group consisting of Al, Fe, V, Cr, Ti, Ta, Mg and Mo, and 0 < x < 1, 0 < y < 1, 0 < z < 1, 0 < w < 1, and x + y + z + w = 1)); those compounds in which the transition metal elements are partially substituted with at least one metal element; or the like. The positive electrode active material layer may include any one compound or two or more compounds of them. However, the scope of the present disclosure is not limited thereto.

Particularly, preferred are LiCoO₂, LiMnO₂, LiMn₂O₄, lithium nickel manganese cobalt oxides (e.g. Li(Ni_{1/3}Mn_{1/3}Co_{1/3})O₂, Li(Ni_{0.6}Mn_{0.2}Co_{0.2})O₂, Li(Ni_{0.4}Mn_{0.3}Co_{0.3})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, etc.), lithium nickel cobalt aluminum oxides (e.g. Li(Ni_{0.8}Co_{0.15}Al_{0.05})O₂, etc.) or the like, with a view to improvement of the capacity characteristics and stability of a battery.

### (Binder and Conductive Material)

The types and contents of the binder and the conductive material used for the positive electrode slurry may be the same as described above with reference to the negative electrode.

### (Solvent)

The solvent used for the positive electrode slurry is not particularly limited, as long as it is used conventionally for manufacturing a positive electrode. Particular examples of the solvent include, but are not limited to: pure water; amine-based solvents, such as N,N-dimethylaminopropylamine, diethylene triamine, N,N-dimethyl formamide (DMF), or the like; ether-based solvents, such as tetrahydrofuran; ketone-based solvents, such as methyl ethyl ketone; ester-based solvents, such as methyl acetate; amide-based solvents, such as dimethyl acetamide, N-methyl-2-pyrrolidone (NMP), or the like; dimethyl sulfoxide (DMSO), or the like. Such solvents may be used alone or in combination.

The solvent may be used in such an amount that it allows dissolution or dispersion of the positive electrode active material, the conductive material and the binder therein, and provides a viscosity capable of realizing excellent thickness uniformity upon the application to the positive electrode current collector, considering the slurry coating thickness or production yield.

### [Method for Manufacturing Positive Electrode]

The method for manufacturing the positive electrode for a lithium-ion secondary battery according to an embodiment of the present disclosure may include the steps of: dissolving or dispersing a positive electrode active material optionally with a binder, a conductive material, a thickener, or the like, in a solvent to obtain a positive electrode slurry; and forming a positive electrode active material layer on a positive electrode current collector, for example, by applying the positive electrode slurry to a positive electrode current collector to obtain a positive electrode, similarly to the method for manufacturing a negative electrode.

### [Separator]

In the lithium-ion secondary battery according to an embodiment of the present disclosure, the separator functions to separate the negative electrode and the positive electrode from each other and to provide a lithium-ion transport channel. Any separator may be used with no particular limitation, as long as it is used conventionally as a separator for a lithium-ion secondary battery. Particularly, the separator preferably shows low resistance against electrolyte ion migration and high wettability with an electrolyte. Particular examples of the separator may include a porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, or a laminate having two or more layers of such porous polymer films. In addition, a conventional porous non-woven fabric, such as a non-woven fabric made of high-melting point glass fibers, polyethylene terephthalate fibers, or the like, may be used. Further, a separator coated with a ceramic ingredient or polymer material in order to ensure heat resistance or mechanical strength may be used.

### [Non-Aqueous Electrolyte]

In the non-aqueous electrolyte secondary battery according to an embodiment of the present disclosure, the non-aqueous electrolyte may include an organic liquid electrolyte, an inorganic liquid electrolyte, or the like, which may be used for manufacturing a secondary battery, but is not limited thereto.

The non-aqueous electrolyte may include an organic solvent and a lithium salt, and may further include additives, if necessary. Hereinafter, the liquid electrolyte is also referred to as 'electrolyte solution'.

The organic solvent is not particularly limited, as long as it can function as a medium through which ions participating in the electrochemical reactions of a battery can be transported. Particular examples of the organic solvent include, but are not limited to: ester-based solvents, such as methyl acetate, ethyl acetate, γ-butyrolactone and ε-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bonded aromatic ring or ether bond); amide-based solvents, such as dimethyl formamide; dioxolane-based solvents, such as 1,3-dioxolane; sulfolane-based solvents, or the like. Such solvents may be used alone or in combination. Particularly, carbonate-based solvents are preferred. In addition, more preferred is a mixture capable of enhancing the charge/discharge characteristics of a battery, wherein the mixture includes a cyclic carbonate (e.g. ethylene carbonate or propylene carbonate) having high ion conductivity and high dielectric constant and a low-viscosity linear carbonate-based compound (e.g. ethyl methyl carbonate, dimethyl carbonate or diethyl carbonate). In this case, when mixing the cyclic carbonate with the linear carbonate at a volume ratio of about 1:1-1:9, it is possible to realize excellent electrolyte quality.

The lithium salt is not particularly limited, as long as it is a compound capable of providing lithium ions used in a lithium-ion secondary battery. Particular examples of the lithium salt include, but are not limited to: LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. Such lithium salts may be used alone or in combination. For example, the lithium salt may be present in the electrolyte at a concentration of 0.1-2 mol/L. When the concentration of the lithium salt falls within the above-defined range, the electrolyte has suitable conductivity and viscosity and shows excellent electrolyte quality, and thus lithium ions can be transported effectively.

Additives may be used optionally in order to improve the life characteristics of a battery, to inhibit degradation of the capacity of a battery and to improve the discharge capacity of a battery. Particular examples of the additives include, but are not limited to: haloalkylene carbonate-based compounds, such as fluoroethylene carbonate (FEC) and difluoroethylene carbonate (DFEC); pyridine; triethyl phosphite; triethanolamine; cyclic ethers; ethylene diamine; n-glyme; triamide hexaphosphate; nitrobenzene derivatives; sulfur; quinonimine dyes; N-substituted oxazolidinone; N,N-substituted imidazolidine; ethylene glycol dialkyl ether; ammonium salts; pyrrole; 2-methoxyethanol; aluminum trichloride, or the like. Such additives may be used alone or in combination. The additives may be used in an amount of 0.1-15 wt% based on the total weight of the electrolyte.

Particularly, fluoroethylene carbonate and difluoroethylene carbonate may function as a coating film-forming agent which forms a coating film on the interface between an electrode and electrolyte. For example, when at least one of fluoroethylene carbonate and difluoroethylene carbonate is used, a high-quality solid electrolyte interface (SEI) film is formed during the alloying of the silicon-based material with lithium in the negative electrode using a negative electrode active material containing a silicon-based material, thereby allowing stable charge/discharge. The content of the coating film-forming agent may be 0.1-15 wt%, preferably 0.5-10 wt%, more preferably 1-7 wt%, based on the total weight of the electrolyte. The coating film-forming agent may include at least one of fluoroethylene carbonate and difluoroethylene carbonate.

### [Method for Manufacturing Non-Aqueous Electrolyte Secondary Battery]

The non-aqueous electrolyte secondary battery according to an embodiment of the present disclosure may be obtained by interposing the separator and electrolyte between the negative electrode and the positive electrode obtained as described above. Particularly, the non-aqueous electrolyte secondary battery may be obtained by forming an electrode assembly by disposing the separator between the negative electrode and the positive electrode, introducing the electrode assembly to a battery casing, such as a cylindrical battery casing or a prismatic battery casing, injecting the electrolyte thereto, and sealing the battery casing.

The battery casing may be any one used conventionally in the art. For example, the shape of the battery casing may include a cylindrical shape using a can, a prismatic shape, a pouch-like shape or a coin-like shape.

The lithium-ion secondary battery according to an embodiment of the present disclosure may be used not only as a power source for a compact device but also as a unit cell of a medium- to large-size battery module including a plurality of battery cells. Preferred examples of such medium- to large-size devices include electric vehicles, hybrid electric vehicles, plug-in hybrid electric vehicles, power storage systems, or the like, but are not limited thereto.

### MODE FOR DISCLOSURE

Hereinafter, the present disclosure will be explained in more detail with reference to examples and comparative examples. However, the scope of the present invention is not limited thereto but as set out in the appended claims.

### [Example 1]

First, 90 wt% of a granulated product of artificial graphite with natural graphite (average particle diameter: 20 µm, weight ratio of artificial graphite to natural graphite = 8:2) was mixed with 10 wt% of silicon monoxide (SiO) having an average particle diameter of 5 µm, and 1 wt% of carbon black as a conductive material and 1.7 wt% of carboxymethyl cellulose (CMC) as a thickener, based on the total weight of the mixture, were added to the mixture, and then pure water was further added thereto to a solid content of 65 wt% to prepare a slurry. Then, the slurry was subjected to hard mixing by using a planetary centrifugal mixer. The slurry had a temperature of 70°C during the hard mixing. After that, 1.5 wt% of styrene butadiene rubber (SBR) as a binder was added to the resultant slurry, and pure water was further added thereto to facilitate application, thereby providing a solid content controlled to 50 wt%. Then, the slurry was applied to copper foil, dried at 60°C for 30 minutes and vacuum dried at 120°C for 12 hours, and the resultant structure was pressed to an electrode density of 1.65 g/cc to obtain a negative electrode.

### [Example 2]

A negative electrode was obtained in the same manner as Example 1, except that the amount of pure water was controlled so that the solid content of the slurry might be 60 wt% during the hard mixing. The slurry had a temperature of 65°C during the hard mixing.

### [Example 3]

A negative electrode was obtained in the same manner as Example 1, except that a granulated product of SiCrTi alloy (atomic weight ratio (Si:Cr:Ti) = 82.4:8.8:8.8) having an average particle diameter of 2 µm, instead of silicon monoxide (SiO), was mixed with the granulated product of artificial graphite with natural graphite. The slurry had a temperature of 72°C during the hard mixing.

### [Comparative Example 1]

A negative electrode was obtained in the same manner as Example 1, except that the amount of pure water was controlled so that the solid content of the slurry might be 55 wt% during the hard mixing. The slurry had a temperature of 57°C during the hard mixing.

### [Comparative Example 2]

A negative electrode was obtained in the same manner as Example 3, except that the amount of pure water was controlled so that the solid content of the slurry might be 55 wt% during the hard mixing. The slurry had a temperature of 58°C during the hard mixing.

### [Comparative Example 3]

A negative electrode was obtained in the same manner as Example 1, except that artificial graphite powder having an average particle diameter of 20 µm was used instead of the granulated product of artificial graphite with natural graphite. The slurry had a temperature of 36°C during the hard mixing.

### [Comparative Example 4]

A negative electrode was obtained in the same manner as Example 1, except that a powder mixture containing artificial graphite powder having an average particle diameter of 20 µm and natural graphite powder having an average particle diameter of 5 µm at a weight ratio of 8:2 was used instead of the granulated product of artificial graphite with natural graphite. The slurry had a temperature of 50°C during the hard mixing.

### [Comparative Example 5]

A negative electrode was obtained in the same manner as Comparative Example 3, except that a 1 wt% of graphene was used as a conductive material instead of 1 wt% of carbon black. The slurry had a temperature of 36°C during the hard mixing.

### [Comparative Example 6]

A negative electrode was obtained in the same manner as Comparative Example 1, except that natural graphite powder having an average particle diameter of 20 µm was used instead of the granulated product of artificial graphite with natural graphite. The slurry had a temperature of 57°C during the hard mixing.

### [Test Example 1: SEM Analysis]

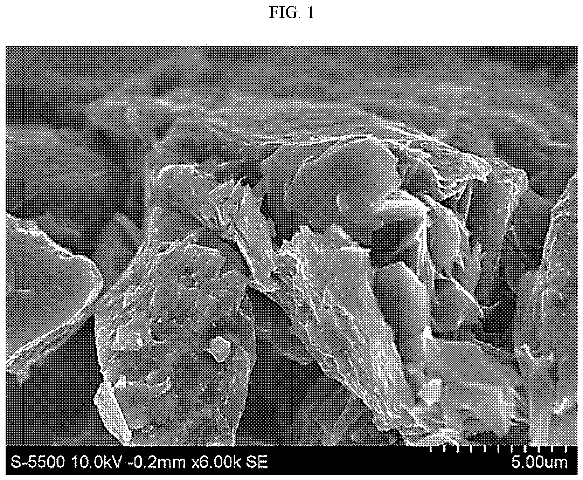

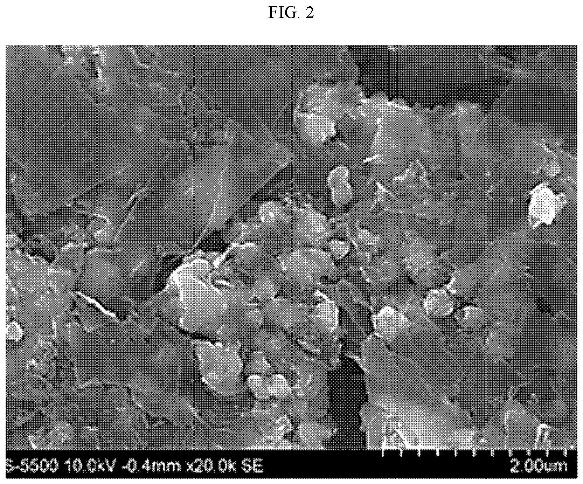

The negative electrode according to Example 3 was observed with a scanning electron microscope (SEM). The SEM images illustrating the portion of natural graphite in the negative electrode are shown in FIG. 1 and FIG. 2. As shown in the SEM images, the surface portion of natural graphite is partially exfoliated, cracked and roughened. Particularly, in the SEM image of FIG. 2, the surface portion of natural graphite is partially curled and is graphenizated , or the granulated product of Si alloy is dispersed on the surface of the exfoliated portion or is in contact therewith.

### [Test Example 2: Capacity Retention]

The capacity retention representing life characteristics was evaluated as follows. The negative electrode obtained according to each of Examples 1-3 and Comparative Examples 1-6 and metal lithium as a counter electrode (i.e. positive electrode) were used to obtain a coin cell (half-cell). In addition, each coin cell was charge/discharged in a constant current mode of 0.2 C with a cutoff voltage of 1.5 V for the first cycle (first time). Under the same condition, each coin cell was charged/discharged for the second cycle (second time). Then, 48 cycles (48 times) of the same charge/discharge were repeated at a constant current of 0.5 C to determine the discharge capacity (mAh). In other words, total 50 times of charge/discharge cycles were repeated, including the first time and the second time of charge/discharge cycles. In addition, the capacity retention was calculated as a ratio of the discharge capacity at the 50^{th} charge/discharge cycle based on the discharge capacity of the 3^{rd} cycle (discharge capacity at the 50^{th} cycle/ discharge capacity at the 3^{rd} cycle). The results are shown in the following Table 1.

**[Table 1]**

| | Graphite-based material | Silicon-based material | Conductive material | Slurry solid content upon hard mixing (wt%) | Capacity retention 50^{th}/3^{rd} (%) |
|---|---|---|---|---|---|
| Ex. 1 | Granulated product of artificial graphite with natural graphite | SiO | Carbon black | 65 | 99 |
| Ex. 2 | Granulated product of artificial graphite with natural graphite | SiO | Carbon black | 60 | 97 |
| Ex. 3 | Granulated product of artificial graphite with natural graphite | Si alloy | Carbon black | 65 | 97 |
| Comp. Ex. 1 | Granulated product of artificial graphite with natural graphite | SiO | Carbon black | 55 | 85 |
| Comp. Ex. 2 | Granulated product of artificial graphite with natural graphite | Si alloy | Carbon black | 55 | 82 |
| Comp. Ex. 3 | Artificial graphite | SiO | Carbon black | 65 | 80 |
| Comp. Ex. 4 | Powder mixture of artificial graphite with natural graphite | SiO | Carbon black | 65 | 85 |
| Comp. Ex. 5 | Artificial graphite | SiO | Graphene | 65 | 81 |
| Comp. Ex. 6 | Natural graphite | SiO | Carbon black | 55 | 83 |

As can be seen from Table 1, Examples 1-3 using a granulated product of artificial graphite with natural graphite, as a graphite-based material, and a slurry solid content of 60 wt% or more during the hard mixing can provide a high capacity retention. It is thought that this is because a high-level and firm conductive path is formed throughout the whole negative electrode by the partial exfoliation of natural graphite, and the conductive path is retained even when the negative electrode active material (particularly, the silicon-based material) is swelled repeatedly during charge/discharge. In addition, it is thought that a relatively high slurry temperature of 65°C or higher used during the hard mixing according to Examples 1-3 also accelerates the hard mixing.

Meanwhile, in the case of each Comparative Examples 1 and 2, even though a granulated product of artificial graphite with natural graphite is used as a graphite-based material, each electrode uses a low slurry solid content of 55wt% during the hard mixing to cause a decrease in capacity retention. It is thought that since the slurry has low viscosity during the hard mixing, no exfoliation of natural graphite occurs in the granulated product. Similarly, it is thought that natural graphite powder is not exfoliated in the case of Comparative Example 6.

It is thought that the reason why each of Comparative Examples 3 and 5 provides a low capacity retention is that artificial graphite is relatively rigid as compared to natural graphite, artificial graphite undergoes no exfoliation during the hard mixing, and thus a high-level and firm conductive path, like the conductive path in Examples 1-3, cannot be formed. In addition, with reference to Comparative Example 5, simple addition of graphene does not allow both of the graphite-based material and the silicon-based material to be in contact with graphene. Also, in this case, it is difficult to disperse graphene homogeneously in the negative electrode. Furthermore, since graphene tends to be aligned in parallel with the current collector, an isotropic conductive path, like the conductive path in Examples 1-3, is not formed, and the conductive path is insufficient particularly in the direction perpendicular to the surface of the current collector.

In the case of Comparative Example 4, since merely a mixture of artificial graphite with natural graphite is used, artificial graphite is not exfoliated during the hard mixing, and soft natural graphite is excessively pulverized, resulting in a decrease in capacity retention, as compared to Examples 1-3 in which the presence of artificial graphite as a matrix inhibits excessive pulverization of natural graphite.

## Claims

1. A negative electrode for a secondary battery, comprising at least a graphite-based material and a silicon-based material, as a negative electrode active material, and a conductive material,
wherein the graphite-based material comprises a granulated product of artificial graphite with natural graphite,
at least a part of natural graphite in the granulated product is exfoliated partially to form an exfoliated portion, wherein the exfoliated portion is a single layer of graphene, or has a number of graphene layers of 2 or more, and
the exfoliated portion is in contact with the silicon-based material or another granulated product of artificial graphite with natural graphite, or forms a composite with the silicon-based material.

2. The negative electrode for a secondary battery according to claim 1, wherein the silicon-based material comprises either or both of silicon oxide and silicon-based alloy.

3. The negative electrode for a secondary battery according to claim 2, wherein the silicon-based alloy comprises at least one selected from titanium (Ti), vanadium (V), chrome (Cr), manganese (Mn), iron (Fe), cobalt (Co), nickel (Ni) and copper (Cu).

4. The negative electrode for a secondary battery according to claim 1, wherein the conductive material is carbon black.

5. The negative electrode for a secondary battery according to claim 1, wherein the weight ratio of the graphite-based material to the silicon-based material is 98:2-50:50.

6. The negative electrode for a secondary battery according to claim 1, wherein the granulated product comprises artificial graphite and natural graphite at a weight ratio of 60:40-90: 10.

7. A secondary battery comprising the negative electrode as defined in any one of claims 1 to 6, a positive electrode, a separator interposed between the negative electrode and the positive electrode, and an electrolyte.

8. A negative electrode slurry for manufacturing the negative electrode for a secondary battery according to claim 1, comprising:
a graphite-based material and a silicon-based material, as a negative electrode active material; a conductive material; a solvent; and at least one of a thickener and a binder, at a solid content of 60 wt% or more based on the weight of the slurry, wherein the graphite-based material comprises a granulated product of artificial graphite with natural graphite,
wherein at least a part of natural graphite in the granulated product is exfoliated partially to form an exfoliated portion.

9. The negative electrode slurry according to claim 8, wherein the solid content is 65-75 wt% based on the weight of the slurry.

10. A method for manufacturing the negative electrode for a secondary battery according to claim 1, comprising the steps of:
mixing a graphite-based material and a silicon-based material, as a negative electrode active material, a conductive material, a solvent, and at least one of a thickener and a binder to prepare a slurry having a solid content of 60 wt% or more based on the weight of the slurry;
carrying out hard mixing of the slurry; and
applying the slurry to a current collector to obtain a negative electrode,
wherein the graphite-based material is a granulated product of artificial graphite with natural graphite,
wherein at least a part of natural graphite in the granulated product is exfoliated partially to form an exfoliated portion, in the step of carrying out hard mixing of the slurry.

11. The method according to claim 10, which further comprises a step of adding a binder and a solvent to the slurry, after the step of carrying out hard mixing of the slurry.

## Patentansprüche

1. Negativelektrode für eine Sekundärbatterie, umfassend mindestens ein graphitbasiertes Material und ein siliziumbasiertes Material als ein Negativelektrodenaktivmaterial sowie ein leitfähiges Material,
worin das graphitbasierte Material ein granuliertes Produkt aus künstlichem Graphit mit natürlichem Graphit umfasst,
worin zumindest ein Teil des natürlichen Graphits in dem granulierten Produkt teilweise exfoliert ist, um einen exfolierten Anteil zu bilden, worin der exfolierte Anteil eine Einzelschicht aus Graphen ist oder eine Anzahl von Graphenschichten von 2 oder mehr aufweist, und
der exfolierte Anteil mit dem siliziumbasierten Material oder einem anderen granulierten Produkt aus künstlichem Graphit mit natürlichem Graphit in Kontakt steht oder mit dem siliziumbasierten Material einen Verbund bildet.

2. Negativelektrode für eine Sekundärbatterie gemäß Anspruch 1, worin das siliziumbasierte Material entweder Siliziumoxid oder eine siliziumbasierte Legierung oder beides umfasst.

3. Negativelektrode für eine Sekundärbatterie gemäß Anspruch 2, worin die siliziumbasierte Legierung mindestens eines umfasst, ausgewählt aus Titan (Ti), Vanadium (V), Chrom (Cr), Mangan (Mn), Eisen (Fe), Kobalt (Co), Nickel (Ni) und Kupfer (Cu).

4. Negativelektrode für eine Sekundärbatterie gemäß Anspruch 1, worin das leitfähige Material Ruß ist.

5. Negativelektrode für eine Sekundärbatterie gemäß Anspruch 1, worin das Gewichtsverhältnis des graphitbasierten Materials zu dem siliziumbasierten Material 98:2-50:50 beträgt.

6. Negativelektrode für eine Sekundärbatterie gemäß Anspruch 1, worin das granulierte Produkt künstlichen Graphit und natürlichen Graphit in einem Gewichtsverhältnis von 60:40-90:10 umfasst.

7. Sekundärbatterie, umfassend die in einem der Ansprüche 1 bis 6 definierte Negativelektrode, eine Positivelektrode, einen zwischen der Negativelektrode und der Positivelektrode angeordneten Separator und einen Elektrolyten.

8. Negativelektrodenaufschlämmung zur Herstellung der Negativelektrode für eine Sekundärbatterie gemäß Anspruch 1, umfassend:
ein graphitbasiertes Material und ein siliziumbasiertes Material als Negativelektrodenaktivmaterial; ein leitfähiges Material; ein Lösungsmittel; und mindestens eines aus einem Verdickungsmittel und einem Bindemittel, bei einem Feststoffgehalt von 60 Gew.-% oder mehr, bezogen auf das Gewicht der Aufschlämmung, worin das graphitbasierte Material ein granuliertes Produkt aus künstlichem Graphit mit natürlichem Graphit umfasst,
worin zumindest ein Teil des natürlichen Graphits in dem granulierten Produkt teilweise exfoliert ist, um einen exfolierten Anteil zu bilden.

9. Negativelektrodenaufschlämmung gemäß Anspruch 8, worin der Feststoffgehalt 65-75 Gew.-%, bezogen auf das Gewicht der Aufschlämmung, beträgt.

10. Verfahren zur Herstellung der Negativelektrode für eine Sekundärbatterie gemäß Anspruch 1, umfassend die folgenden Schritte:
Mischen eines graphitbasierten Materials und eines siliziumbasierten Materials als ein Negativelektrodenaktivmaterial, eines leitfähigen Materials, eines Lösungsmittels und mindestens eines aus einem Verdickungsmittel und einem Bindemittel, um eine Aufschlämmung mit einem Feststoffgehalt von 60 Gew.-% oder mehr, bezogen auf das Gewicht der Aufschlämmung, herzustellen;
Durchführen einer intensiven Durchmischung der Aufschlämmung; und
Aufbringen der Aufschlämmung auf einen Stromkollektor, um eine Negativelektrode zu erhalten,
worin das graphitbasierte Material ein granuliertes Produkt aus künstlichem Graphit mit natürlichem Graphit ist,
worin zumindest ein Teil des natürlichen Graphits in dem granulierten Produkt im Schritt des Durchführens einer intensiven Durchmischung der Aufschlämmung teilweise exfoliert ist, um einen exfolierten Anteil zu bilden.

11. Verfahren gemäß Anspruch 10, das ferner einen Schritt des Hinzufügens eines Bindemittels und eines Lösungsmittels zu der Aufschlämmung umfasst, nachdem der Schritt der intensiven Durchmischung der Aufschlämmung durchgeführt wurde.

## Revendications

1. Électrode négative pour une batterie secondaire, comprenant au moins un matériau à base de graphite et un matériau à base de silicium, en tant que matériau actif d'électrode négative, et un matériau conducteur,
dans laquelle le matériau à base de graphite comprend un produit granulé de graphite artificiel avec du graphite naturel,
au moins une partie du graphite naturel dans le produit granulé est partiellement exfoliée pour former une portion exfoliée, dans laquelle la portion exfoliée est une seule couche de graphène, ou présente un nombre de couches de graphène de 2 ou plus, et
la portion exfoliée est en contact avec le matériau à base de silicium ou un autre produit granulé de graphite artificiel avec du graphite naturel, ou forme un composite avec le matériau à base de silicium.

2. Électrode négative pour une batterie secondaire selon la revendication 1, dans laquelle le matériau à base de silicium comprend un, ou les deux, parmi l'oxyde de silicium et un alliage à base de silicium.

3. Électrode négative pour une batterie secondaire selon la revendication 2, dans laquelle l'alliage à base de silicium comprend au moins un, choisi, parmi le titane (Ti), le vanadium (V), le chrome (Cr), le manganèse (Mn), le fer (Fe), le cobalt (Co), le nickel (Ni) et le cuivre (Cu).

4. Électrode négative pour une batterie secondaire selon la revendication 1, dans laquelle le matériau conducteur est le noir de carbone.

5. Électrode négative pour une batterie secondaire selon la revendication 1, dans laquelle le rapport pondéral du matériau à base de graphite au matériau à base de silicium est de 98:2-50:50.

6. Électrode négative pour une batterie secondaire selon la revendication 1, dans laquelle le produit granulé comprend du graphite artificiel et du graphite naturel à un rapport pondéral de 60:40-90:10.

7. Batterie secondaire comprenant l'électrode négative telle que définie dans l'une quelconque des revendications 1 à 6, une électrode positive, un séparateur interposé entre l'électrode négative et l'électrode positive, et un électrolyte.

8. Suspension pour électrode négative destinée à fabriquer l'électrode négative pour une batterie secondaire selon la revendication 1, comprenant :
un matériau à base de graphite et un matériau à base de silicium, en tant que matériau actif d'électrode négative ; un matériau conducteur ; un solvant ; et au moins l'un parmi un épaississant et un liant, à une teneur en matières solides de 60 % en poids ou plus par rapport au poids de la suspension, dans laquelle le matériau à base de graphite comprend un produit granulé de graphite artificiel avec du graphite naturel,
dans laquelle au moins une partie du graphite naturel dans le produit granulé est partiellement exfoliée pour former une portion exfoliée.

9. Suspension pour électrode négative selon la revendication 8, dans laquelle la teneur en matières solides est de 65 à 75 % en poids par rapport au poids de la suspension.

10. Procédé de fabrication de l'électrode négative pour une batterie secondaire selon la revendication 1, comprenant les étapes suivantes :
mélanger un matériau à base de graphite et un matériau à base de silicium, en tant que matériau actif d'électrode négative, un matériau conducteur, un solvant, et au moins l'un parmi un épaississant et un liant pour préparer une suspension ayant une teneur en matières solides de 60 % en poids ou plus par rapport au poids de la suspension ;
effectuer un malaxage intensif de la suspension ; et
appliquer la suspension sur un collecteur de courant pour obtenir une électrode négative,
dans lequel le matériau à base de graphite est un produit granulé de graphite artificiel avec du graphite naturel,
dans lequel au moins une partie du graphite naturel dans le produit granulé est partiellement exfoliée pour former une portion exfoliée, dans l'étape consistant à effectuer le malaxage intensif de la suspension.

11. Procédé selon la revendication 10, qui comprend en outre une étape consistant à ajouter un liant et un solvant à la suspension, après l'étape consistant à effectuer le malaxage intensif de la suspension.
